Europäisches Patentamt

**European Patent Office**

Office européen des brevets

(11) Publication number: **0 063 252**
**B1**

(12) **EUROPEAN PATENT SPECIFICATION**

(45) Date of publication of patent specification: **19.12.84**

(21) Application number: **82102418.9**

(22) Date of filing: **23.03.82**

(51) Int. Cl.³: **H 04 N 5/32, H 04 N 9/54**

(54) **Stereofluoroscopic apparatus.**

(30) Priority: **30.03.81 JP 46908/81**

(43) Date of publication of application:
**27.10.82 Bulletin 82/43**

(45) Publication of the grant of the patent:
**19.12.84 Bulletin 84/51**

(84) Designated Contracting States:
**DE FR GB NL**

(56) References cited:
**DE-B-1 200 122**
**FR-A-1 187 768**
**FR-A-1 335 565**
**FR-A-1 362 617**
**FR-A-2 390 870**
**JP-A-56 136 530**
**US-A-3 439 114**
**US-A-4 058 833**

**1980 SID INTERNATIONAL SYMPOSIUM
DIGEST OF TECHNICAL PAPERS, vol. XI, April
1980, pages 222-223, Coral Gables (USA); D.B.
RIVERS et al.: "A fluoroscope with realtime
stereoscopic output"**

(73) Proprietor: **Nishiyama, Shoji**
**15-3 Oazatoyabe-cho Hachinohe-shi**
**Aomori-ken (JP)**

(73) Proprietor: **Kabushiki Kaisha Toshiba**
**72, Horikawa-cho Saiwai-ku**
**Kawasaki-shi Kanagawa-ken 210 (JP)**

(72) Inventor: **Shoji, Nishiyama**
**15-3, Oazatoyabe-cho**
**Hachinohe-shi Aomori-ken (JP)**
Inventor: **Senzo, Fujii**
**418 Toshiba-Nozaki-ryo 1376-1, Shimoishigami**
**Otawara-shi Tochigi-ken (JP)**
Inventor: **Katsutoshi, Ito**
**148-141, Minamigoya Nishinasuno-machi**
**Nasu-gun Tochigi-ken (JP)**

(74) Representative: **Patentanwälte Henkel,**
**Pfenning, Feiler, Hänzel & Meinig**
**Möhlstrasse 37**
**D-8000 München 80 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

### Description

The present invention relates to a stereofluoroscopic apparatus.

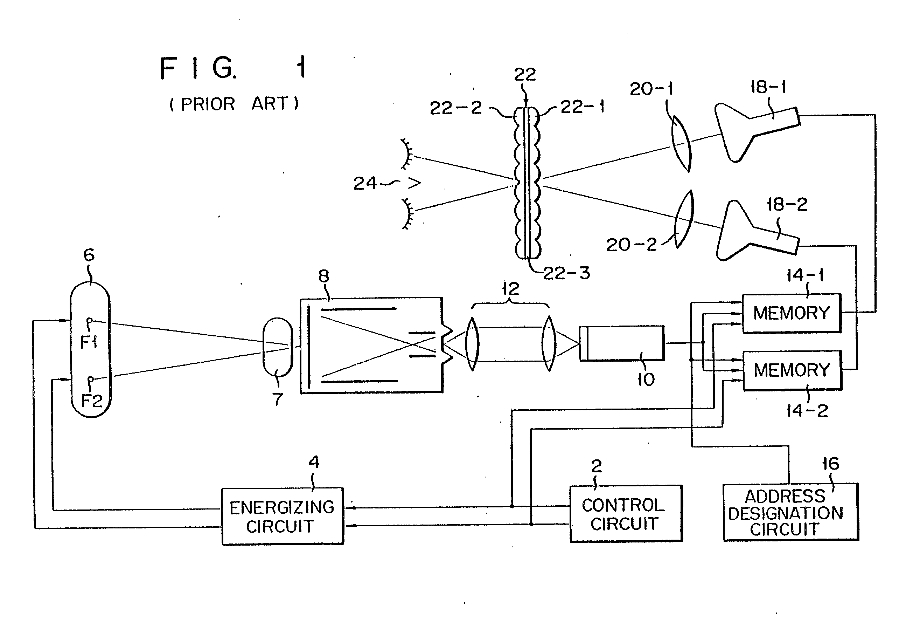

Conventional methods for stereoscopic observation of a fluoroscopic X-ray image include a method for separating an X-ray image by a polarizing filter and observing the separated X-ray images with polarized spectacles on both eyes, and a method for stereoscopic observation of the separated X-ray images with stereoscopic spectacles. Apart from these methods, another method is known for stereoscopic observation of a fluoroscopic X-ray image without a special kind of spectacles. Fig. 1 shows a conventional stereoscopic apparatus for observation of an X-ray image without a special kind of spectacles as set out in Japanese Patent Disclosure No. 56-136530.

This X-ray television apparatus has a control circuit 2 which generates first and second control signals at different timings in response to the depression of a "photograph" key (not shown), an energizing circuit 4 which generates first and second energizing signals in response to the first and second control signals from the control circuit 2, and a bifocal point X-ray tube 6 which radiates X-rays from two focal points F1 and F2 to a subject 7 in response to the first and second energizing signals, respectively, from the energizing circuit 4 so as to form an X-ray image of the subject 7 on a screen of an X-ray image intensifier tube 8. The X-ray image intensifier tube 8 converts the received X-ray image into a visible image, intensifies the luminance of the visible image, and supplies the visible image to a television camera 10 through an optical system 12. The television camera 10 supplies the image data corresponding to the received visible image to first and second video frame memories 14-1 and 14-2. These video frame memories 14-1 and 14-2 are set in the write mode in response to the first and second control signals, respectively, from the control circuit 2. The duration of the write mode is set so that each of the video frame memories 14-1 and 14-2 is capable of storing the image data for one frame in response to an address designation signal from an address designation circuit 16. The address designation circuit 16 repeatedly performs the address designation for one frame during the write mode. At the end of the first and second control signals from the control circuit 2, the video frame memories 14-1 and 14-2 are respectively set in the playback mode. Then, if the first control signal is generated by the control circuit 2 and the X-rays are radiated from the focal point F1 of the X-ray tube 6, the image data corresponding to the X-ray image formed on the screen of the image intensifier tube 8 is stored for one frame in the first video frame memory 14-1. On the other hand, if the second control signal is generated by the control circuit 2 and the X-rays are radiated from the focal point F2 of the X-ray tube 6, the image data for one frame is stored in the second video frame memory 14-2. In this manner, image data corresponding to two X-ray images of one frame obtained by radiating X-rays to the subject 7 from different directions are respectively stored in the first and second video frame memories 14-1 and 14-2. In response to the address designation signal from the address designation circuit 16, the image data stored in the first and second video frame memories 14-1 and 14-2 are read out and respectively supplied to projecting-type cathode-ray tubes (CRTs) 18-1 and 18-2. Then, these CRTs 18-1 and 18-2 project the corresponding optical images on a transmissive screen 22 of a double-lenticulated sheet structure through projection lenses 20-1 and 20-2. The transmissive screen 22 has a first sheet 22-1 of lenticular lenses for receiving the image from the CRTs 18-1 and 18-2, a second sheet 22-2 of lenticular lenses which are arranged at the same lens pitch as those of the first sheet 22-1, and a dispersion membrane 22-3 which is interposed between the first and second sheets so as to make contact with the flat surfaces thereof.

As is well known, the first sheet 22-1 of lenticular lenses forms images corresponding to the images from the CRTs 18-1 and 18-2 on the dispersion membrane 22-3. The images on the dispersion membrane 22-3 are projected in predetermined directions of an observation area by the action of the second sheet 22-2 of lenticular lenses. Since the images from the CRTs 18-1 and 18-2 become incident on the first sheet 22-1 of lenticular lenses at different angles of incidence, these images are projected toward the observation area in different directions by the second sheet 22-2 of lenticular lenses. Then, an observer 24 can adjust both of his eyes to receive two images projected in different directions so that he can observe the television image stereoscopically.

In order to record and reproduce the image data for obtaining a stereofluoroscopic image in a television apparatus of this type, it is possible to record the output signal from the television camera 10 by a video tape recorder or the like and to supply the image data to the CRTs 18-1 and 18-2 from the video tape recorded as required for playback of the image data. It is also possible to couple these video frame memories 14-1 and 14-2 to monitoring CRTs, to photograph the images on these CRTs with a camera, to combine two photographs obtained, and to observe the combined image by stereofluoroscopic spectacles or the like. However, with these methods, the quality of the stereofluoroscopic image obtained is significantly degraded, or recording and playback of the image tape takes too long time and is troublesome.

An apparatus for transmitting and receiving stereoscopic X-ray images is known from FR—

A—1362 617. However, this apparatus has no means for observing and recording the images.

In 1980 SID International Symposion Digest of Technical Papers, Vol. XI, April 1980, pages 222 and 223, a stereofluoroscopic system is shown which depending on the state of a switching circuit applies the image signals to a monitoring device or to a storage device. The storage device consists of two storage tubes. This system therefore shows the afore mentioned drawback.

From US—A—3439 114 a fluoroscopic television and cine-camera system is known which simultaneously displays the image on the screen of a television receiver and records this image with a cine-camera assembly. The images for displaying and recording are generated from a single image by means of a beam splitting mirror. However, this known system does not refer to stereoscopic images. An essentially identical system is also known from DE—B—1200 122.

It is an object of this invention to provide a stereofluoroscopic apparatus which allows stereofluoroscopic observation of an X-ray image without using a special kind of spectacles and which also allows stereofluoroscopic recording of the X-ray image in a relatively simple construction.

According to an aspect of the present invention, there is provided a stereofluoroscopic apparatus comprising: X-ray radiating means for radiating X-rays to a subject from different directions to form a plurality of X-ray images of the subject viewed from different directions, image data generating means for receiving the X-rays radiated by the X-ray radiating means and for generating a plurality of image data corresponding to the plurality of X-ray images, a plurality of image projection units which are coupled to the image data generating means to project images corresponding to the plurality of image data, a transmissive screen of double-lenticulated sheet structure, a lenticular lens sheet on a flat surface of which is formed a photosensitive member, and an optical system including at least one movable reflecting surface which, in the first position, guides the images from the plurality of image projection units to one of the light-receiving surface sides of the transmissive screen and the lenticular lens sheet and which, in a second position, guides the images from the plurality of image projection units to the other of the light-receiving surface sides of the transmissive screen and the lenticular lens sheet.

According to the present invention, in the observation mode, the images from the plurality of image projection units are guided to the transmissive screen. In the recording mode, the images from the plurality of image projecting units are reflected to be converted into mirror images and are then guided to the lenticular lens sheet. Since this may be realized by using one movable reflecting mirror, an image of good quality may be recorded with a relatively simple structure.

This invention can be more fully understood from the following detailed description when taken in conjunction with the accompanying drawings, in which:

Fig. 1 is a schematic view showing the configuration of a conventional stereoscopic apparatus;

Fig. 2 is a schematic view showing the configuration of a stereofluoroscopic apparatus according to an embodiment of the present invention;

Fig. 3 shows the waveform of an output signal from a blanking control circuit used in the stereofluoroscopic apparatus shown in Fig. 2;

Fig. 4 is a view showing the arrangement of the lenticular lens sheet having a photosensitive member recorded with an image and a light box for reproducing the recorded image;

Fig. 5 is a view showing a transmissive screen and an optical system for projecting images which are mirror images of each other on the lenticular lens sheet with the photosensitive member; and

Fig. 6 is a view showing part of an optical system according to a modification of the stereofluoroscopic apparatus shown in Fig. 1.

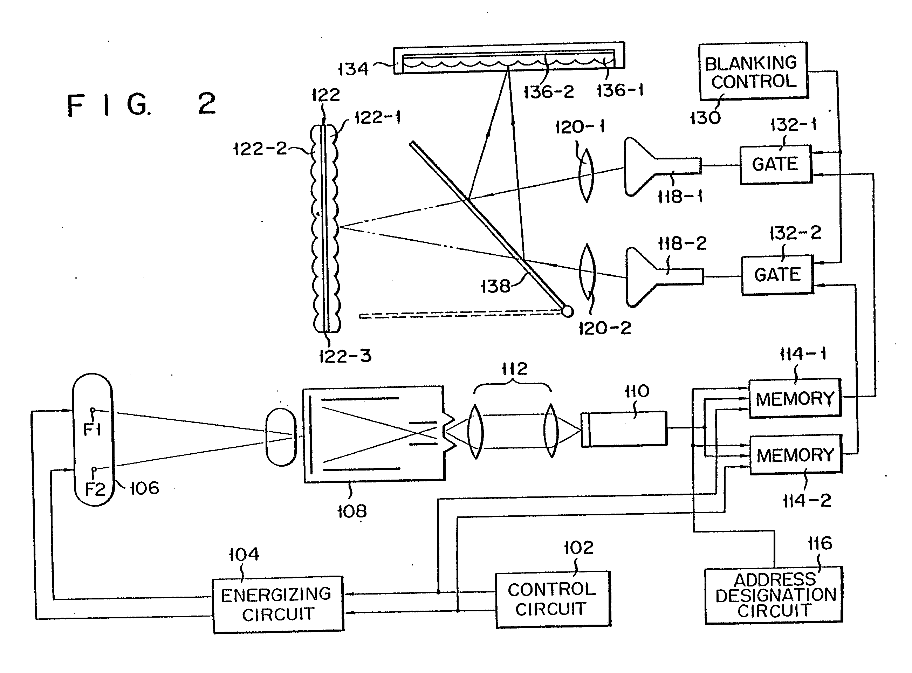

Fig. 2 is a schematic view showing the configuration of a stereofluoroscopic apparatus according to an embodiment of the present invention. This stereofluoroscopic apparatus has a control circuit 102, an energizing circuit 104, a bifocal point X-ray tube 106, an X-ray image intensifier tube 108, a television camera 110, an optical system 112, video frame memories 114-1 and 114-2, an address designation circuit 116, projecting-type CRTs 118-1 and 118-2, projection lenses 120-1 and 120-2, and a transmissive screen 122 which are respectively arranged in a similar manner as the control circuit 2, the energizing circuit 4, the bifocal point X-ray tube 6, the X-ray image intensifier tube 8, the television camera 10, the optical system 12, the video frame memories 14-1 and 14-2, the address designation circuit 16, the CRTs 18-1 and 18-2, the projection lenses 20-1 and 20-2, and the transmissive screen 22 of the X-ray television apparatus shown in Fig. 1. As shown in Fig. 2, the projection lenses 120-1 and 120-2 are so disposed as to have their optical axes inwardly displaced from the center axes of the projecting type CRTs 118-1 and 118-2. This arrangement prevents the images projected on the transmissive screen 122 from being subject to keystone distortion.

The X-ray television apparatus of the present invention further has a blanking control circuit 130 and gate circuits 132-1 and 132-2 which control supply of video signals to the CRTs 118-1 and 118-2 from the video frame memories 114-1 and 114-2 in response to the blanking control signal from the blanking control circuit 130. The X-ray television apparatus further has a holder 134 for holding a sheet 136-1 of cylindrical lenticular lenses, at the flat back surface of which is formed a photosensitive member 136-2 by application of a photosensitive emulsion as a photosensitive material; and a reflecting mirror 138 which is set in the first position indicated by the broken line in the figure in the observation mode so that the images from the CRTs 118-1 and 118-2 are projected on the transmissive screen 122, and which is set at the second position indicated by the solid line in the recording mode so that the images from the CRTs 118-1 and 118-2 are reflected toward the sheet 136-1. Although not shown in the figure, the holder 134 has a flare stop plate driven by a drive motor (not shown) for driving a reflecting mirror 138 so that extra light may not become incident on the photosensitive member 136-2 through the sheet 136-1.

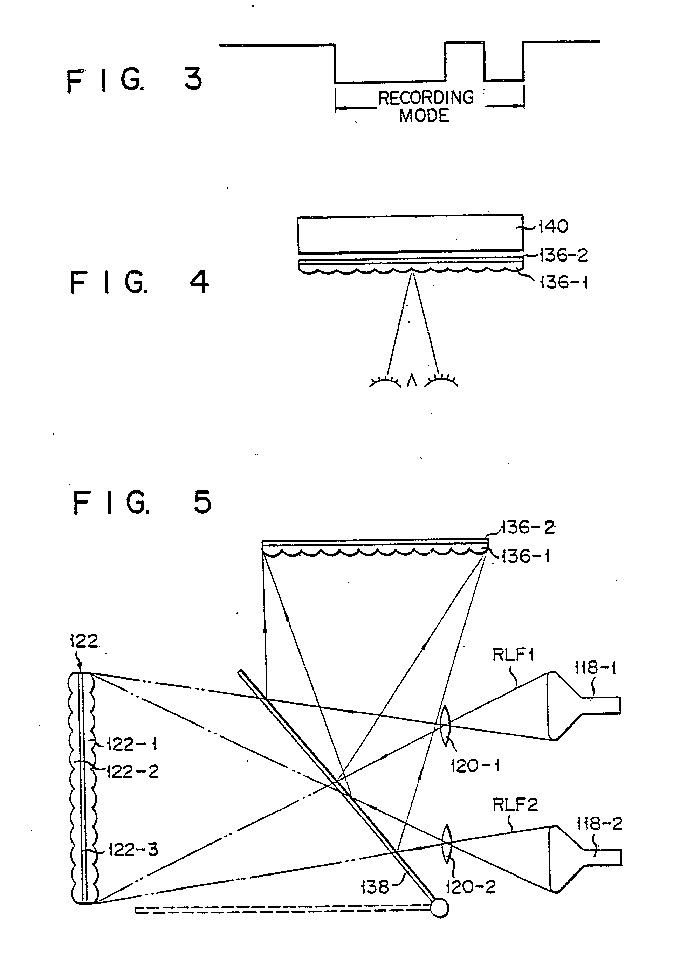

The blanking control circuit 130 comprises a clock pulse generator, an RS flip-flop which is set in response to a pulse which is generated in response to the depression of a "record" key, an AND gate, input terminals of which are connected to the clock pulse generator and the RS flip-flop, and a counter which counts clock pulses generated by the clock pulse generator through the AND gate. When the count value is 0, the counter generates an output signal of high level. When the count value is within the range of 1 to N1, the counter generates an output signal of low level. When the count value is within the range of N1 to N2 (where N2>N1), the counter generates an output signal of high level. When the count value is within the range of N2 to N3 (where N3>N2), the counter generates an output signal of low level. When the count value reaches N2, the counter supplies a first reset signal to the driving motor, returns the reflecting mirror 138 to the first position, and closes the flare stop plate of the holder 134. When the count value reaches N3, the counter generates a second reset signal to reset its own count value to 0, resets the RS flip-flop, and interrupts its own counting operation. In this manner, the output signal as shown in Fig. 3 is generated.

In the observation mode, the reflecting mirror 138 is set in the first position indicated by the broken line and an output signal of high level is generated by the blanking control circuit 130. Then, the video signals from the video frame memories 114-1 and 114-2 are supplied to the CRTs 118-1 and 118-2 without disturbance by the gate circuits 132-1 and 132-2. These CRTs 118-1 and 118-2 project the corresponding images on a lenticular lens sheet 122-1 of the transmissive screen 122. As a result, the observer can observe the stereofluoroscopic image formed on a dispersion member 122-2 of the transmissve screen 122.

In the recording mode, the reflecting mirror 138 is set at the second position indicated by the solid line, the flare stop plate of the holder 134 is released, and a control signal as shown in Fig. 3 is generated from the blanking control circuit 130. That is, in the initial period of the recording mode, an output signal of low level is generated by the blanking control circuit 130, so that the video signals from the video frame memories 114-1 and 114-2 are inhibited by the gate circuits 132-1 and 132-2, respectively. Thus, images are not formed by the CRTs 118-1 and 118-2. While the output signal of low level is generated from the blanking control circuit 130, the reflecting mirror 138 is set to the second position, and the flare stop plate of the holder 134 is released. Thereafter, an output signal of high level is generated by the blanking control circuit 130. During the duration of the output signal of high level, the video signals are repeatedly read out from the video frame memories 114-1 and 114-2 and are respectively supplied to the CRTs 118-1 and 118-2. Then, the corresponding images are projected by the CRTs 118-1 and 118-2, reflected by the reflecting mirror 138, and then projected on the lenticulated surface of the sheet 136-1. The images projected on the lenticulated surface of the sheet 136-1 are formed on the photosensitive member 136-2 which is thus exposed to the combination of these images. The exposed photosensitive membrane 136-2 is developed and the back surface of it is then radiated with light from a light box 140 as shown in Fig. 4, so that the observer may observe the combined image formed on the photosensitive member 136-2. The images formed on the sheet 136-1 when the reflecting mirror 138 is at the second position are the mirror images of the images formed on the sheet 122-1 when the reflecting mirror 138 is at the first position. As clearly shown in Fig. 5, light rays RLF1 and RLF2 from the CRTs 118-1 and 118-2 become incident on the left side of the sheet 122-1 when the reflecting mirror 138 is at the first position. When the reflecting mirror 138 is at the second position, these light rays become incident on the right side of the sheet 136-1. Thus, when the images recorded on the photosensitive member 136-2 are observed from the front by radiating the back surface of the sheet 136-1 with light, natural stereofluoroscopic images similar to those observed through the transmissive screen 122 may be observed.

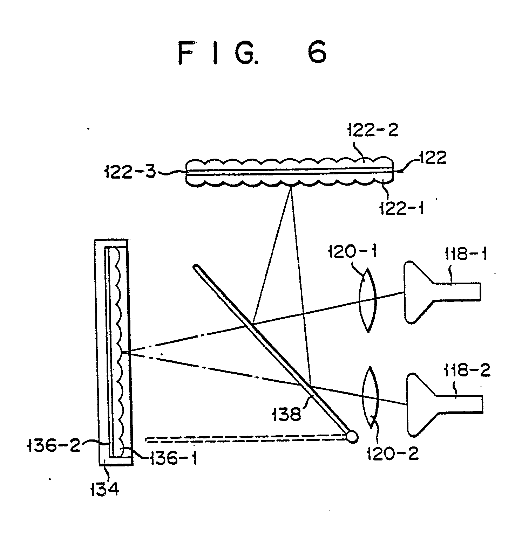

Although the present invention has been described with reference to a particular embodiment, the present invention is not limited to this. For example, in the stereofluoroscopic apparatus shown in Fig. 2, in the observation mode, the reflecting mirror 138 is set at the first position. In the recording mode, the reflecting mirror 138 is set at the second position so that the images from the CRTs 118-1 and 118-2 are reflected. However, as shown in Fig. 6, it is possible to set the reflecting mirror 138 at the second position in the observation mode so that the images from the CRTs 118-1 and 118-2 are guided to the transmissive screen 122 and to set the reflecting mirror 138 at the first position in the recording mode so that the images from the CRTs 118-1 and 118-2 are projected on the sheet 136-1.

Although the stereofluoroscopic apparatus shown in Fig. 2 is designed for observation of still images, it is possible to design it to observe moving images. For example, in the respective operation cycles, the first and second control signals are generated by the control circuit 102 at different timings and the corresponding image data is stored in the video frame memories 114-1 and 114-2, respectively. Thereafter, the image data is read out from the memories 114-1 and 114-2, and the corresponding images are generated by the CRTs 118-1 and 118-2. By repeatedly executing the operation cycle, a moving image may be observed through the transmissive screen 122. In the embodiment shown in Fig. 2, since the exposure of the photosensitive member 136-2 is controlled by the exposure control circuit formed of the blanking control circuit 130 and the gate circuits 132-1 and 132-2, it is also possible to execute exposure control by closing the flare stop plate of the holder after opening it for a predetermined time as in a normal camera.

## Claims

1. A stereofluoroscopic apparatus having X-ray radiating means (104, 106) for radiating X-rays from different directions to a subject to form a plurality of X-ray images of said subject viewed from different directions, image data generating means (108, 110, 112, 114-1, 114-2) for receiving the X-rays radiated by said X-ray radiating means (104, 106) and for generating a plurality of image data corresponding to said plurality of X-ray images, a plurality of image projection units (118-1, 118-2) which are coupled to said image data generating means and which project images corresponding to said plurality of image data, and a transmissive screen (122) of double-lenticulated sheet structure, characterized by further comprising a lenticular lens sheet (136-1) on a flat surface of which is formed a photosensitive member (136-2), and an optical system (120-1, 120-2, 138) including at least one movable reflecting surface (138) which is set in a first position to permit the images from said plurality of image projection units (118-1, 118-2) to be transmitted to one of light-receiving surface sides of said transmissive screen (122) and said lenticular lens sheet (136-1) and which is set in a second position to permit the images from said plurality of image projection units (118-1, 118-2) to be transmitted to the other of the light-receiving surface sides of said transmissive screen (122) and said lenticular lens sheet (136-1).

2. A stereofluoroscopic apparatus according to claim 1, characterized in that said X-ray generating means has a bifocal point X-ray tube (106).

3. A stereofluoroscopic apparatus according to claim 2, characterized by further comprising a control circuit (130, 132-1, 132-2) which controls supply of said plurality of image data to said plurality of image projection units (118-1, 118-2) from said image data generating means.

4. A stereofluoroscopic apparatus according to claim 1 or 2, characterized in that said transmissive screen (122) receives the images from said image projection units when said optical system is set at the first position.

5. A stereofluoroscopic apparatus according to claim 4, characterized in that said optical system has a movable reflecting mirror (138) which reflects the images from said image projection units to guide the images toward said lenticular lens sheet (136-1) when said optical system is set at the second position.

6. A stereofluoroscopic apparatus according to claim 1, 2 or 3, characterized in that said lenticular lens sheet (136-1) receives the images from said image projection units when said optical system is set at the first position.

7. A stereofluoroscopic apparatus according to claims 5 or 6, further comprising a holder (134) for holding said lenticular lens sheet (136-1).

8. A stereofluoroscopic apparatus according to claims 6 or 7, characterized in that said optical system has a movable reflecting mirror (138) which reflects the images from said image projection units to guide the images toward said transmissive screen.

9. A stereofluoroscopic apparatus according to claim 1, 2 or 3, in which said optical system includes lenses (120-1; 120-2) whose optical axes are displaced from those of said plurality of image projection units (118-1; 118-2) to prevent the images formed on said transmissive screen (122) and said lenticular lens sheet (136-1) from being subject to keystone distortion.

## Patentansprüche

1. Stereodurchleuchtungsvorrichtung mit Röntgenstrahl-Bestrahlungseinrichtung (104, 106) zum Einstrahlen von Röntgenstrahlen aus verschiedenen Richtungen auf ein Objekt, um eine Vielzahl von Röntgenstrahlbildern des aus verschiedenen Richtungen beobachteten Objektes zu erzeugen, einer Bilddaten-Generatoreinrichtung (108, 110, 112, 114-1, 114-2) zum Empfangen der durch die Röntgenstrahl-Bestrahlungseinrichtung (104, 106) ausgestrahlten Röntgenstrahlen und zum Erzeugen einer Vielzahl von Bilddaten entsprechend der Vielzahl von Röntgenstrahlbildern, einer Vielzahl von Bildprojektionseinheiten (118-1, 118-2), die mit der Bilddaten-Generatoreinrichtung gekoppelt sind und die Bilder entsprechend der Vielzahl von Bilddaten projizieren, und einem durchlässigen Schirm (122) von doppeltlinsen- ähnlicher Schichtstruktur, gekennzeichnet durch eine linsenähnliche Linsenschicht (136-1) auf einer flachen Oberfläche, aus der ein photoempfindliches Glied (136-2) gebildet ist, und ein optisches System (120-1, 120-2, 138) einschließlich mindestens einer beweglichen reflektierenden Oberfläche (138), die in eine erste Stellung eingestellt ist, um eine Übertragung der Bilder von der Vielzahl der Bildprojektionseinheiten (118-1, 118-2) zu einer der Lichtempfangsoberflächenseiten des durchlässigen Schirms (122) und der linsenähnlichen Linsenschicht (136-1) zu erlauben, und die in eine zweite Stellung eingestellt ist, um eine Übertragung der Bilder von der Vielzahl der Bildprojektionseinheiten (118-1, 118-2) zu der anderen der Lichtempfangsoberflächenseiten des durchlässigen Schirmes (122) und der linsenähnlichen Linsenschicht (136-1) zu erlauben.

2. Stereodurchleuchtungsvorrichtung nach Anspruch 1, dadurch gekennzeichnet, daß die Röntgenstrahl-Generatoreinrichtung eine bifokale Röntgenstrahlröhre (106) aufweist.

3. Stereodurchleuchtungsvorrichtung nach Anspruch 2, gekennzeichnet durch eine Steuerschaltung (130, 132-1, 132-2), die die Einspeisung der Vielzahl der Bilddaten zu der Vielzahl der Bildprojektionseinheiten (118-1, 118-2) von der Bilddaten-Generatoreinrichtung steuert.

4. Stereodurchleuchtungsvorrichtung nach Anspruch 1 oder 2, dadurch gekennzeichnet, daß der durchlässige Schirm (122) die Bilder von den Bildprojektionseinheiten empfängt, wenn das optische System in die erste Stellung eingestellt ist.

5. Stereodurchleuchtungsvorrichtung nach Anspruch 4, dadurch gekennzeichnet, daß das optische System einen verfahrbaren reflektierenden Spiegel (138) aufweist, der die Bilder von den Bildprojektionseinheiten reflektiert, um die Bilder zu der linsenähnlichen Linsenschicht (136-1) zu führen, wenn das optische System in die zweite Stellung eingestellt ist.

6. Stereodurchleuchtungsvorrichtung nach Anspruch 1, 2 oder 3, dadurch gekennzeichnet, daß die linsenähnliche Linsenschicht (136-1) die Bilder von den Bildprojektionseinheiten empfängt, wenn das optische System in die erste Stellung eingestellt ist.

7. Stereodurchleuchtungsvorrichtung nach Anspruch 5 oder 6, gekennzeichnet durch einen Halter (134) zum Halten der linsenähnlichen Linsenschicht (136-1).

8. Stereodurchleuchtungsvorrichtung nach Anspruch 6 oder 7, dadurch gekennzeichnet, daß das optische System einen verfahrbaren reflektierenden Spiegel (138) hat, der die Bilder von den Bildprojektionseinheiten reflektiert, um die Bilder zu dem durchlässigen Schirm zu führen.

9. Stereodurchleuchtungsvorrichtung nach Anspruch 1, 2 oder 3, dadurch gekennzeichnet, daß das optische System Linsen (120-1; 120-2) aufweist, deren optische Achsen von denjenigen der Vielzahl der Bildprojektionseinheiten (118-1; 118-2) verschoben sind, um zu verhindern, daß die auf der durchlässigen Schicht (122) und der linsenähnlichen Linsenschicht (136-1) erzeugten Bilder einer Trapezverzerrung unterworfen sind.

**Revendications**

1. Appareil stéréofluoroscopique possédant un moyen (104, 106) de rayonnement de rayons X servant à rayonner des rayons X sur un sujet depuis des directions différentes afin de former plusieurs images de rayons X dudit sujet vues depuis des directions différentes, un moyen (108, 110, 112, 114-1, 114-2) de production de données d'images servant à recevoir les rayons X rayonnés par ledit moyen (104, 106) de rayonnement de rayons X et à produire plusieurs données d'images correspondant auxdites images de rayons X, plusieurs unités (118-1, 118-2) de projection d'images qui sont couplées audit moyen de production de données d'images et qui projettent des images correspondant auxdites données d'images, et un écran de transmission (122) à structure en feuille doublement lenticulée, caractérisé en ce qu'il comprend en outre une feuille (136-1) de lentilles lenticulaires sur une face plane de laquelle. est formé un élément photosensible (136-2) et un système optique (120-1, 120-2, 138) comportant au moins une surface réfléchissante mobile (138) qui est placé dans une première position pour permettre que les images venant desdites unités (118-1, 118-2) de projection d'images soient transmises à l'une des faces de réception de lumière dudit écran de transmission (122) et de ladite feuille (136-1) de lentilles lenticulaires et qui est placé dans une deuxième position pour permettre que les images venant desdites unités (118-1, 118-2) de projection d'images soient transmises à l'autre desdites faces de réception de lumière dudit écran de transmission (122) et de ladite feuille (136-1) de lentilles lenticulaires.

2. Appareil stéréofluoroscopique selon la revendication 1, caractérisé en ce que ledit moyen de production de rayons X possède un tube de rayons X (106) à deux foyers.

3. Appareil stéréofluoroscopique selon la revendication 2, caractérisé en ce qu'il comprend en outre un circuit de commande (130, 132-1, 132-2) qui commande la délivrance desdites données d'images auxdites unités (118-1, 118-2) de projection d'images depuis ledit moyen générateur de données d'images.

4. Appareil stéréofluoroscopique selon la revendication 1 ou 2, caractérisé en ce que ledit écran de transmission (122) reçoit les images desdites unités de projection d'images lorsque ledit système optique est placé dans la première position.

5. Appareil stéréofluoroscopique selon la revendication 4, caractérisé en ce que ledit système optique possède un miroir réfléchissant mobile (138) qui réfléchit les images venant desdites unités de projection d'images afin de guider les images vers ladite feuille (136-1) de lentilles lenticulaires lorsque ledit système optique est placé dans la deuxième position.

6. Appareil stéréofluoroscopique selon la revendication 1, 2 ou 3, caractérisé en ce que ladite feuille (136-1) de lentilles lenticulaires reçoit les images desdites unités de projection d'images lorsque ledit système optique est placé dans la première position.

7. Appareil stéréofluoroscopique selon la revendication 5 ou 6, comprenant en outre un support (134) qui porte ladite feuille (136-1) de lentilles lenticulaires.

8. Appareil stéréofluoroscopique selon la revendication 6 ou 7, caractérisé en ce que ledit système optique possède un miroir réfléchissant mobile (138) qui réfléchit les images desdites unités de projection d'images afin de guider les images vers ledit écran de transmission.

9. Appareil stéréofluoroscopique selon la revendication 1, 2 ou 3, dans lequel ledit système optique comporte des lentilles (120-1; 120-2) dont les axes optiques sont écartés par rapport à ceux desdites unités (118-1; 118-2) de projection d'images afin d'empêcher que les images formées sur ledit écran de transmission (122) et ladite feuille (136-1) de lentilles lenticulaires ne soient soumises à une distorsion trapézoïdale.

F I G.  1

(PRIOR ART)

0 063 252

F I G. 2

FIG. 3

RECORDING
MODE

FIG. 4

140

136-2

136-1

∧

FIG. 5

136-2

136-1

122

RLF1

118-1

122-1

122-2

120-1

RLF2

118-2

122-3

138

120-2

# F I G. 6